**Europäisches Patentamt**

**European Patent Office**

**Office européen des brevets**

(19)

(11) Veröffentlichungsnummer : **0 226 627**
**B1**

(12)

# EUROPÄISCHE PATENTSCHRIFT

(45) Veröffentlichungstag der Patentschrift :
03.01.90

(21) Anmeldenummer : 86904124.4

(22) Anmeldetag : 04.06.86

(86) Internationale Anmeldenummer :
PCT/EP 86/00334

(87) Internationale Veröffentlichungsnummer :
WO/8607321 (18.12.86 Gazette 86/27)

(51) Int. Cl.$^5$ : **B 60 T 8/66**

(54) VERFAHREN ZUR EINSTELLUNG EINES OPTIMIERTEN BREMSSCHLUPFS.

(30) Priorität : 04.06.85 DE 3519888

(43) Veröffentlichungstag der Anmeldung :
01.07.87 Patentblatt 87/27

(45) Bekanntmachung des Hinweises auf die Patenterteilung : 03.01.90 Patentblatt 90/01

(84) Benannte Vertragsstaaten :
DE FR GB IT SE

(56) Entgegenhaltungen :
DE—A— 2 204 092
DE—A— 2 530 609
DE—A— 3 009 519
FR—A— 1 407 168
GB—A— 1 018 548
US—A— 3 967 862

(73) Patentinhaber : ROBERT BOSCH GMBH
Postfach 50
D-7000 Stuttgart 1 (DE)

(72) Erfinder : KOST, Friedrich
Heinrich-Ebner-Strasse 24
D-7000 Stuttgart 50 (DE)
Erfinder : VAN ZANTEN, Anton
Waldstrasse 15/2
D-7257 Ditzingen 1 (DE)
Erfinder : HEESS, Gerhard
Stuttgarter Strasse 90
D-7146 Tamm (DE)
Erfinder : KREISSELMEIER, Gerhard
Brandaustrasse 10
D-3501 Ahnatal (DE)

(74) Vertreter : Kammer, Arno, Dipl.-Ing.
ROBERT BOSCH GmbH Zentralabteilung Patente
Postfach 50
D-7000 Stuttgart 1 (DE)

## Beschreibung

Die Erfindung betrifft ein Verfahren zur Einstellung eines hinsichtlich des Kraftschlußbeiwerts in Längs- und Querrichtung optimierten Bremsschlupfs eines Fahrzeugrads mit den Merkmalen des Oberbegriffs des Anspruchs 1.

Es ist z. B. aus der DE-A-30 09 519 ein Antiblockierregelsystem bekannt, bei dem ein fester maximaler Bremsschlupf von ca. 20 % vorgegeben wird.

Der Antiblockierregler regelt den Bremsdruck so, daß der Bremsschlupf in der Nähe dieses maximalen Bremsschlupfs liegt. Beim Gegenstand der genannten Veröffentlichung geht es darum, die Radgeschwindigkeit und damit den Bremsschlupf mit großer Geschwindigkeit zu berechnen, um ein schnelles Reagieren des Antiblockierreglers auf abweichende Schlupfwerte zu ermöglichen.

Aufgabe der vorliegenden Erfindung ist es, während einer geregelten Bremsung eines Fahrzeugrades einen Bremsschlupfwert einzustellen, bei dem zum einen der Kraftschlußbeiwert $\mu$ in Längsrichtung nahe dem maximal erreichbaren Wert liegt, und zum anderen ein ausreichender Kraftschlußbeiwert in Querrichtung zur Verfügung steht. Der dafür benötigte Schlupfwert liegt unterhalb des Wertes, an dem der Kraftschlußbeiwert in Längsrichtung maximal ist.

Diese Aufgabe wird durch die im Anspruch 1 angegebenen Merkmale gelöst.

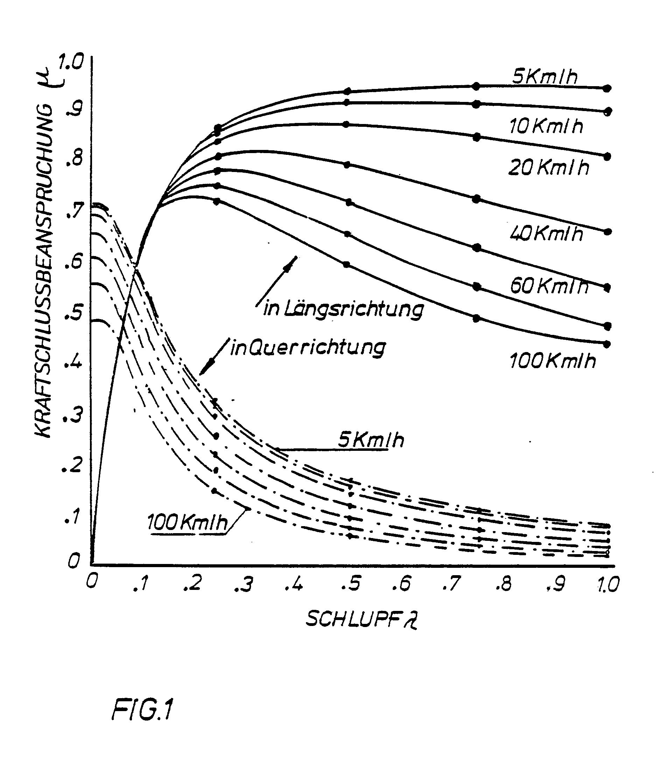

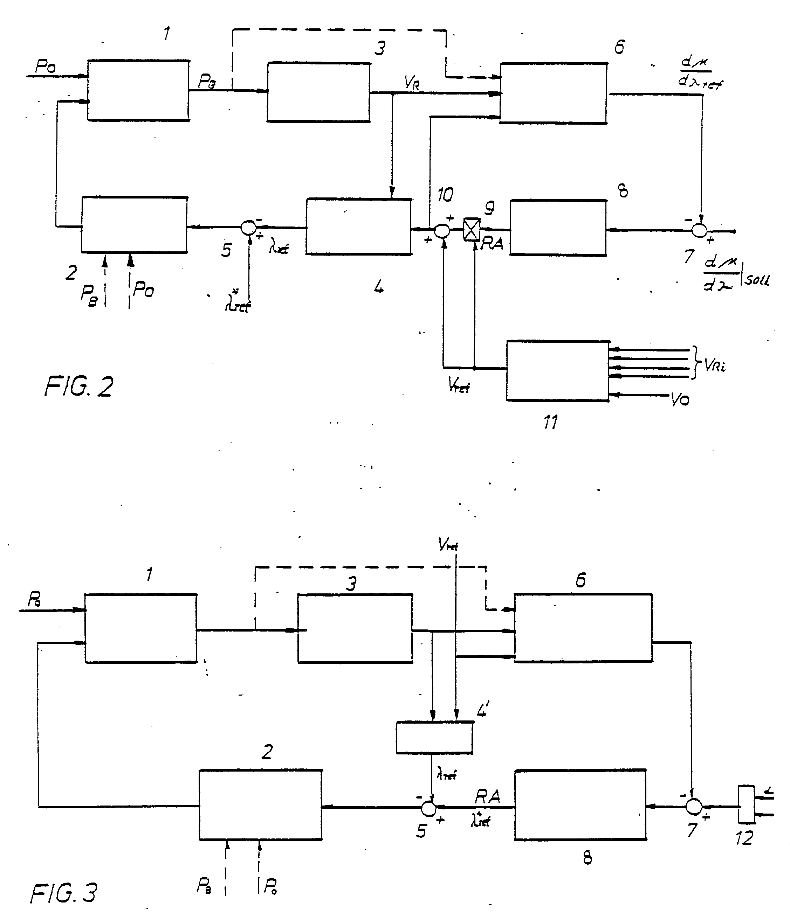

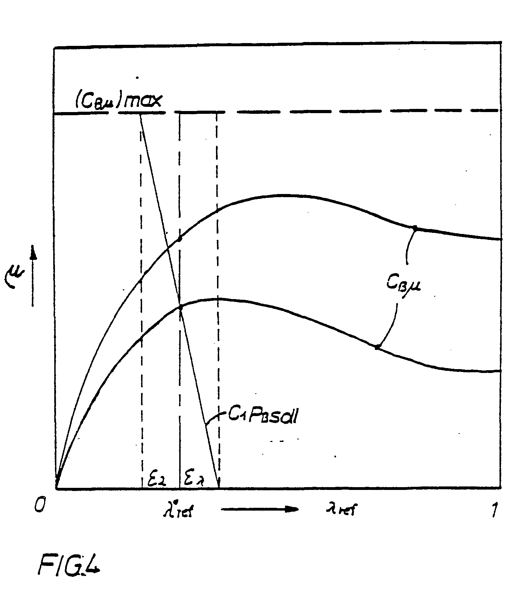

Während am maximalen Kraftschlußbeiwert in Längsrichtung die Bremsschlupfkurve $\mu(\lambda)$ die Steigung Null besitzt, nimmt $\mu(\lambda)$ am einzustellenden Schlupfwert positive Steigungen an. Dies zeigt Fig. 1. Neben dem Vorteil höherer Seitenführungskräfte bietet die erfindungsgemäße Lehre die Möglichkeit, die bei geregelter Bremsung am Fahrzeug angreifenden Giermomente gezielt zu beschränken und damit die Fahrzeugbeherrschbarkeit zu verbessern.

Abhängig von den Sollwertvorgaben findet das Regelkonzept also selbsttätig einen Kompromiß zwischen möglichst hoher Bremskraft und hoher Seitenführungskraft des Rades. Im Gegensatz zu bestehenden Regelkonzepten können zu hohe Bremsschlupfbereiche mit geringer Seitenführungskraft vermieden werden. Diese Eigenschaft bleibt auch bei sehr unterschiedlichen Reibverhältnissen zwischen Reifen und Straße bestehen.

Man kann den vorgegebenen positiven Steigungswert als Festwert vorgeben (z. B. 3-5), ihn in Abhängigkeit von den augenblicklichen Bedingungen auch variieren, ihn, z. B. vom Lenkwinkel $\alpha$ abhängig machen und ihn z. B. bei Geradeausfahrt, bei der kein Kraftschlußbeiwert in Querrichtung benötigt wird, sogar zu O werden lassen. Weiterhin kann man den Steigungswert noch von anderen Parametern abhängig machen, z. B. von der Gierbeschleunigung des Fahrzeuges.

Der Schlupfregler dem die Differenz des ermittelten Schlupfwerts und eines Vergleichswerts zugeführt werden, kann als P-Regler ausgebildet sein; vorzugsweise enthält er zusätzlich noch ein I und/oder ein D Anteil. Aus der mittels dieses Reglers ermittelten Regelgröße werden je nach Ausbildung der Bremsdrucksteuereinrichtung (z. B. ein 3/3-Magnetventil) die entsprechenden Ansteuersignale gebildet. Werden der vom Fahrer vorgegebene Bremsdruck und der herrschende Bremsdruck gemessen, so kann man die Zeitdauer berechnen, für die die Bremsdrucksteuereinheit in die eine oder andere Richtung (Druckauf- oder -abbau) angesteuert werden muß. Es ist jedoch auch möglich, ohne diese Druckmeßwerte auszukommen.

Außerdem ist es möglich, Impulsreihen gegebener Frequenz vorzugeben und die Breite der Impulse zu variieren.

Im überlagerten Regelkreis muß eine Schätzgröße (Identifikation) dür $d\mu/d\lambda$ gewonnen werden, die dann mit dem Festwert oder einem änderbaren Steigungswert für

$$\frac{d\mu}{d\lambda}\bigg|_{Soll}$$

verglichen wird. In dem Regler des überlagerten Kreises wird mittels des Differenzwertes entweder ein Vergleichsschlupfwert $\lambda_{ref}{}^*$ gebildet, mit dem der in üblicher Weise ermittelte Schlupfwert $\lambda_{ref}$ verglichen wird, wobei die Differenz im unterlagerten Kreis verarbeitet wird, oder es wird die in üblicher Weise gewonnene Referenzgeschwindigkeit, die ja bekanntlich nur eine Annäherung an die tatsächliche Fahrzeuggeschwindigkeit darstellt, mittels des Regelvorgangs der überlagerten Kreises verändert und die so veränderte Pseudoreferenzgeschwindigkeit in die Schlupfbildung einbezogen. Der so gewonnene Schlupf wird nunmehr mit einem Festschlupfwert verglichen und die gewonnene Differenz wird zur Bremsdruckbeeinflussung benutzt.

Anhand der Zeichnung werden Ausführungsbeispiele der Erfindung näher erläutert.

Es zeigen:

Fig. 1 zwei Kurvenscharen darstellend den Verlauf des Reibbeiwerts $\mu$ in Längs- und Querrichtung mit der Geschwindigkeit als Parameter,

Fig. 2 ein Blockschaltbild eines Kaskaden-Regelkreises mit unter- und überlagertem Kreis,

Fig. 3 ein anderes Blockschaltbild eines Kaskaden-Regelkreis mit unter- und überlagertem Kreis,

Fig. 4 ein Diagramm zur Erläuterung der Gewinnung des Ausdrucks für den Bremsdrucksollwert,

Fig. 5 ein Flußdiagramm für die Ermittlung der Ansteuersignale für die Drucksteueranordnung,

Fig. 6 ein Flußdiagramm zur Identifikation des jeweils vorhandenen Steigungswerts $d\mu/d\lambda_{ref}$,

Fig. 7 ein Blockschaltbild eines Teils eines Kaskadenregelkreises gemäß einer anderen Ausbildung,

Fig. 8 ein Flußdiagramm zur Identifikation der hierfür abzuschätzenden Größen a, b$^+$ und b$^-$,

Fig. 9 ein Flußdiagramm betreffend die Gewinnung des Reglersignals im überlagerten Regelkreis.

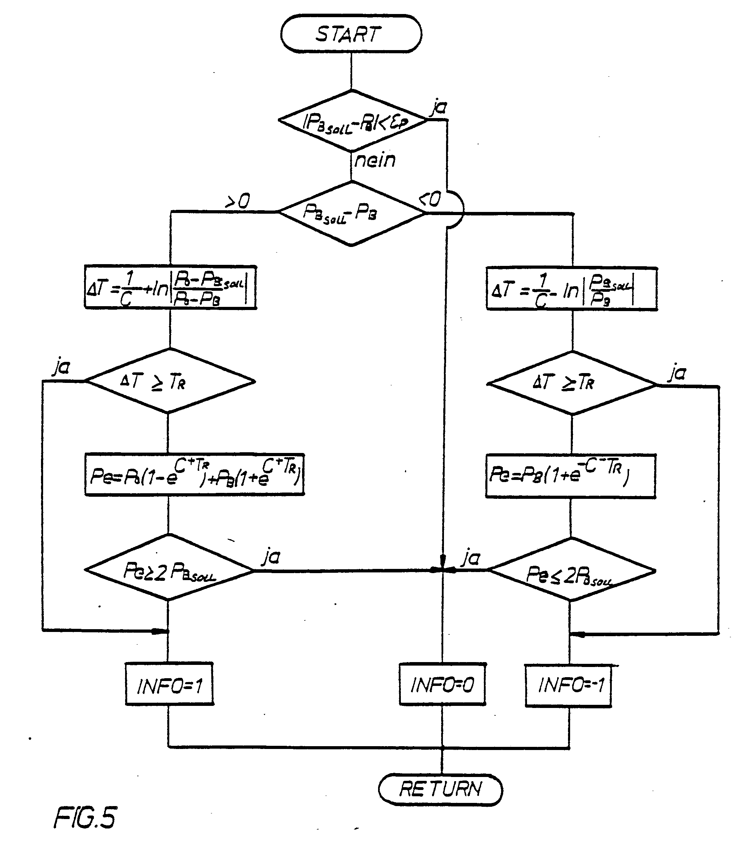

In Fig. 2 besteht der unterlagerte Regelkreis aus einem Stellglied 1 z. B. ein 3/3 Magnetventil, dem der vom Fahrer vorgegebene Bremsdruck $P_0$ und Ansteuersignale eines Regelglieds 2 zugeführt werden, aus einem die Regelstrecke Rad-Straße-Bremse-Sensor darstellenden Block 3, dem der Bremsdruck $P_B$ zugeführt wird und der ein der Radgeschwindigkeit $V_R$ entsprechendes Signal abgibt, aus einem den Bremsschlupf $\lambda_{ref} = 1 - V_R/v_{ref}$ bildenden Glied 4, dem $V_R$ und $v_{ref}$ entsprechende Signale zugeführt werden, aus einem Additionsglied 5 zur Bildung der Differenz eines fest vorgegebenen Schlupfwerts $\lambda^*_{ref}$ und des ermittelten Schlupfwerts $\lambda_{ref}$ und aus dem Regelglied 2, dem gegebenenfalls noch die Werte der Drucke $P_0$ und $P_B$ zugeführt werden.

Der überlagerte Regelkreis besteht aus einem Identifikationsblock 6, aus einem Additionsglied 7, dem der identifizierte Steigungswert $d\mu/d\lambda_{ref}$ und der vorgegebene Vergleichswert

$$\left.\frac{d\mu}{d\lambda}\right|_{Soll}$$

zugeführt werden, aus einem Regelglied 8, dem die Differenz

$$\left.\frac{d\mu}{d\lambda}\right|_{Soll} - d\mu/d\lambda_{ref}$$

zugeführt wird und das ein aus dieser Regelabweichung gewonnenes Signal RA abgibt, aus einem Multiplizierer 9, in dem die in einem Block 11 in üblicher Weise aus den Radgeschwindigkeiten gewonnene, der Fahrzeuggeschwindigkeit $V_{ref}$ mit RA multipliziert wird und aus einem Additionsglied 10, in dem zu dem Produkt aus dem Multiplikationsglied 9 noch die Referenzgeschwindigkeit zu addiert wird. Die dabei gewonnene Pseudoreferenzgeschwindigkeit $v_{ref}$ wird dem Identifikationsblock 6 als Fahrzeuggeschwindigkeit zugeführt, dem auch noch ein Signal entsprechend $V_R$ und gegebenenfalls ein Signal entsprechend $P_B$ zugeführt wird. Außerdem wird der gewonnene Wert für $v_{ref}$ dem Block 4 als Referenzgeschwindigkeit zugeführt. Obwohl hier eine konstante Vergleichsgröße $\lambda_{ref}$ vorgegeben ist, wird über die Pseudoreferenzgeschwindigkeit $v_{ref}$ ein falscher Schlupf mit $\lambda_{ref}$ vorgetäuscht und der tatsächlich eingestellte Schlupfwert $\lambda$ variiert.

Der in Fig. 3 dargestellte Regelkreis unterscheidet sich von dem der Fig. 2 lediglich dadurch, daß im den Schlupf bildenden Glied 4' die von den Rädern abgeleitete Referenzgeschwindigkeit $V_{ref}$ verwertet wird, daß dem Additionsglied 5' die Regelabweichung des Reglers 8 direkt als Referenzschlupf $\lambda_{ref}$ zugeführt wird, und daß durch einen Block 12 angedeutet ist, daß

$$\left.\frac{d\mu}{d\lambda}\right|_{Soll}$$

in Abhängigkeit von Parametern variiert werden kann.

Die letztgenannte Maßnahme ist auch beim Ausführungsbeispiel der Fig. 2 anwendbar.

Die Regler 2 der Fig. 2 und 3 werten die Schlupfdifferenz des Addierglieds 5 aus und erzeugen Steuersignale für das Stellglied 1 zur Variation des Bremsdrucks. Die Schlupfdifferenz wird über den überlagerten Regelkreis in Abhängigkeit vom in Block 6 identifizierten Steigunswert der $\mu$-Schlupfkurve im Vergleich zum z. B. vorgegebenen Festwert

$$\left.\frac{d\mu}{d\lambda}\right|_{Soll}$$

beeinflußt, sodaß die gesamte Regelanordnung einen Schlupfwert einstellt, dem bei der gerade gültigen $\mu$-Schlupfkurve ein dem Festwert entsprechender Steigungswert entspricht.

Für die Auslegung des Schlupfregelkreises wird beispielhaft der Fall vorgestellt, daß die Druckmodulation mit einem 3/3-Magnetventil erzeugt wird.

Die 3 Stellungen dieses Ventils werden durch die Differentialgleichungen

$$\begin{aligned}
\dot{P}_B &= C^+ \cdot (P_0 - P_B), && \text{— Druckaufbau} \\
\dot{P}_B &= -C^- \cdot P_B, && \text{— Druckabbau} \\
\dot{P}_B &= 0, && \text{— Druckhalten}
\end{aligned} \quad \Biggr\} \quad (1)$$

3

beschrieben.

Die Ansteuerung des Magnetventils erfolgt durch einen Leistungsverstärker, an dessen Eingang ein Stellsignal ansteht.

Dieses Stellsignal wird von dem Regler 2 erzeugt und kann die Werte : — 1 (Druckabbau), 0 (Druckhalten) und 1 (Druckaufbau) annehmen. Der Regler 2 besteht aus 2 Teilen. Der erst Teil ermittelt die zur Regelung des Bremsschlupfs erforderliche Stellvorgabe.

Der zweite Teil ermittelt daraus die notwendige Ventilstellung.

Im folgenden werden zwei mögliche Auslegungen des Reglers 2 beschrieben. Zur Vereinfachung der Beschreibung sind die verwendeten Symbole in einer Auflistung in Anhang II erläutert.

Bei der ersten Auslegung ermittelt der Regler 2 in seinem ersten Teil den Sollbremsdruck $P_{B\,Soll}$ zu :

$$P_{B\,Soll} = \frac{(C_B \cdot \mu)_{max}}{2 \cdot \varepsilon_\lambda \cdot C_1} \cdot (\lambda_{ref}^* - \lambda_{ref}) + \frac{(C_B \cdot \mu)_{max}}{2 \cdot C_1} \tag{2}$$

Darin sind $\lambda_{ref}^*$, $\varepsilon_\lambda$, $(C_B \cdot \mu)_{max}$ vorzugebende Größen.

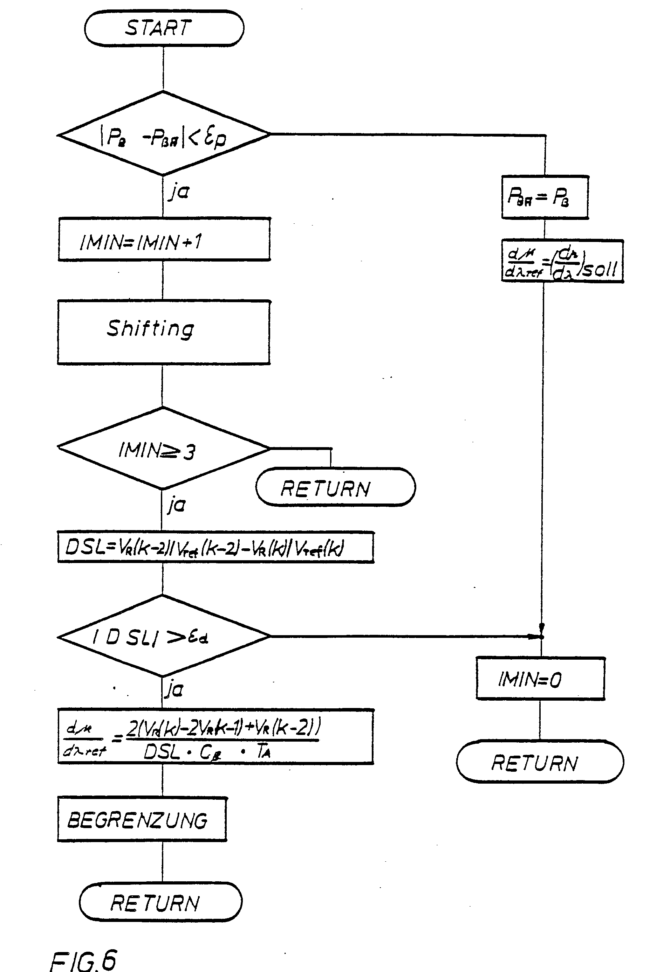

Die Ableitung dieser Beziehung ist in einem Anhang I niedergelegt, der sich auf Fig. 4 bezieht.

Unter der Voraussetzung, daß $\lambda_{ref}$ und $C_1$ exakt bekannt wären, und sich $P_B = P_{B\,Soll}$ mit hinreichend geringer Verzögerung einstellt, wäre garantiert, daß sich ein stationärer Zustand einstellt, für den

$$\lambda_{ref}^* - \varepsilon_\lambda < \lambda_{ref} < \lambda_{ref}^* + \varepsilon_\lambda \tag{3}$$

gilt.

Aus (3) wird ersichtlich, daß sich eine bleibende Regelabweichung von maximal $\varepsilon_\lambda$ einstellen kann.

Um auch diese noch zu verhindern, wird zum Ausdruck (2) ein I-Anteil hinzugenommen.

Mit einem zusätzlichen D-Anteil läßt sich noch das Einschwingverhalten verbessern. Dann lautet die Beziehung

$$P_{B\,Soll} = K_R \cdot \left\{ K_p \cdot (\lambda_{ref}^* - \lambda_{ref}) + K_D \cdot \frac{d}{dt}(\lambda_{ref}^* - \lambda_{ref}) + I_0 + K_I \int_0^t (\lambda_{ref}^* - \lambda_{ref}) \cdot dt \right\}$$
$$\text{mit } I_0 = 1, \quad K_R = \frac{(C_B \cdot \mu)_{max}}{2 \cdot C_1}, \quad K_p = \frac{1}{\varepsilon_\lambda} \tag{4}$$

Die in (4) benötigte Größe $\hat{C}_1$ ist tatsächlich nur ungenau bekannt : es wird daher von dem Schätzwert $\hat{C}_1$ ausgegangen.

Für $C_1 \neq \hat{C}_1$ verändert sich die Reglerverstärkung gegenüber dem gewünschten Wert, für $\lambda \neq \lambda_{ref}$ stellt sich ein Schlupfwert $\lambda \neq \lambda_{ref}^*$ ein.

In dem weiteren Teil des Algorithmus wird die jeweils geeignete Ventilstellung ermittelt.

Eine Voraussetzung dazu ist, daß $P_B$ und $P_O$ gemessen werden. Es wird zuerst abgefragt (sh. Fig. 5), ob $|P_{BS} - P_B| < \varepsilon_p$ ist. Ist dies der Fall, dann wird das Signal 0 gesetzt, d. h. der Druck wird gehalten. Ist dies nicht der Fall, so wird aus dem Vorzeichen entschieden, ob Druckaufbau oder -abbau erforderlich ist. Danach wird die jeweils erforderliche Ventilöffnungszeit $\Delta T$ ermittelt, die zum Erreichen von $P_{B\,Soll}$ nötig wäre. Ist $\Delta T$ größer oder gleich einem Regelintervall $T_R$, so wird ein Steuersignal + 1 oder — 1 abgegeben, d. h. Druck auf- oder abgebaut.

Für $\Delta T < T_R$ wird ermittelt, ob $P_{B\,Soll}$ durch Druckhalten oder durch Öffnen des Ventils genauer erreicht werden kann. Dementsprechend wird das Steuersignal — 1 (Druckaufbau), 0 (Druckhalten) oder — 1 (Druckabbau) abgegeben, wobei $\Delta T$ die Ventilöffnungszeit ist bei Druckauf- oder abbau.

Falls $P_B$ und $P_O$ nicht gemessen werden können, wird zur Schlupfregelung die folgende Auslegung benutzt.

Die Regelabweichung wird in einem PID-Übertragungsglied des Reglers 2 zu $U_R$ gemäß

$$U_R = (\lambda_{ref}^* - \lambda_{ref}) + K_D^1 \frac{d}{dt}(\lambda_{ref}^* - \lambda_{ref}) + K_I^1 \cdot \int_0^t (\lambda_{ref}^* - \lambda_{ref}) \cdot dt \tag{5}$$

umgeformt. Daraus werden dann die Steuersignale bestimmt :

$$\text{Steuersignal} = \begin{cases} +1 & \text{für} \quad U_R > \varepsilon_\lambda, \\ 0 & \text{für} \quad -\varepsilon_\lambda \leq U_R \leq +\varepsilon_\lambda, \\ -1 & \text{für} \quad U_R < -\varepsilon_\lambda, \end{cases} \tag{6}$$

Die beschriebenen Schlupfregelkreise werden durch den überlagerten Regelkreis so eingestellt, daß die Steigung der Schlupfkurve $d\mu/d\lambda_{ref}$ einem vorgebenem Sollwert entspricht.

Die dazu erforderliche Identifikation der Steigung kann besonders einfach dann durchgeführt werden, wenn der Druck $P_B$ über mehrere Abtastzyklen konstant gehalten wird.

Aus (a) des Anhangs I folgt nach einer Differentation

$$\ddot{V}_R = C_B \cdot \frac{d\mu}{d\lambda} \cdot \lambda + \dot{C}_B \cdot \mu(\lambda) \tag{7}$$

Um diese Beziehung auswerten zu können, müssen folgende Annahmen getroffen werden: $C_B \approx \hat{C}_B = \text{const.}$ und $\dot{C}_B \approx 0$. Darin ist $\hat{C}_B$ ein geschätzter Mittelwert von $C_B$.

Daraus ergibt sich in diskretisierter Form die Beziehung.

$$\frac{d\mu}{d\lambda_{ref}}\bigg|_{(K-1)} = \frac{2}{\hat{C}_B \cdot T_A} \cdot \frac{V_R(K) - 2 \cdot V_R(K-1) + V_R(K-2)}{V_R(K-2)/V_{ref}(K-2) - V_R(K)/V_{ref}(K)} \tag{8}$$

aus der die gesuchte Steigung abgeschätzt werden kann, wobei statt $V_F$ die geschätzte Fahrzeuggeschwindigkeit $V_{ref}$ oder $v_{ref}$ benutzt wird.

Aus Gleichung (7) geht hervor, daß zur Berechnung der Steigung $\lambda \neq 0$ gefordert werden muß.

Um Fehler durch störungsbehaftete $V_R$, $V_{ref}$ und $v_{ref}$ zu verringern, wird das ermittelte $d\mu/d\lambda_{ref}$ begrenzt.

In Fig. 6 ist das Flußdiagram für die Identifikation dargestellt. Unterscheidet sich der neue Bremsdruck $P_B$ nur wenig vom vorhergehenden $P_{BA}(< \varepsilon_p)$, so wird identifiziert. Ist er größer, so wird nicht identifiziert. Die ersten drei Blöcke des linken Zweigs berücksichtigen den Anlauffall, bei dem DSL noch nicht den Wert 3 erreicht hat, also noch keine Werte $(K-2)$ bis K vorliegen und die Identifikation deshalb noch nicht stattfinden kann. In den anschließenden Blöcken erfolgt die Identifikation gemäß der Identifikationzbeziehung (8).

Ein weiteres Beispiel für die Realisierung des Kaskadenreglers unter Verwendung von äquidistanten Ansteuerimpulsen für die Bremsdrucksteuereinheit wird im folgenden beschrieben.

Zur Druckmodulation wird wieder ein 3/3-Wegeventil eingesetzt.

Der Ventilansteuerung ist dabei eine Logik vorgeschaltet, die eine ihrem Eingangssignal proportionale Öffnungszeit des Einlaß- bzw. Auslaßventils realisiert und danach beide Ventile schließt, d. h. den Radbremsdruck konstant hält. Für eine kleine Umgebung des Arbeitsbremsdrucks wird vereinfachend angenommen, daß aus einer Aufbauzeit $\Delta T^*(K)$ eine proportionale Bremsdruckerhöhung $\Delta P_{BK}$ resultiert gemäß der Gleichung

$$\Delta P_B(K) = b^+ \cdot \Delta T^*(K), \quad b^+ \approx \text{const.} \tag{9}$$

Analoges gelte für den Druckaufbau:

$$\Delta P_B(K) = b^- \cdot \Delta T^-(K), \quad b^- \approx \text{const.} \tag{10}$$

Die Größen $b^+$, $b^-$ können, wie später gezeigt wird, identifiziert werden. Um zu hohe Schaltfrequenzen zu vermeiden, werden $\Delta T^+(K)$, $\Delta T^-(K)$ dann zu Null gesetzt, wenn sie eine Mindestzeit (von z. B. 2 ms) unterschreiten. Nach oben werden $\Delta T^+(K)$, $\Delta T^-(K)$ auf die Abtastzeit $T_A$ begrenzt.

Im verbleibenden Bereich werden $\Delta T^+(K)$, $\Delta T^-(K)$ nach folgendem Gesetz ermittelt:

$$\left.\begin{array}{l} \Delta T^+(K) = U(K) \\ \Delta T^-(K) = 0 \end{array}\right\} \quad \text{für} \quad U(K) > 0$$

$$\left.\begin{array}{l} \Delta T^+(K) = 0 \\ \Delta T^-(K) = -U_K \end{array}\right\} \quad \text{für} \quad U(K) < 0 \tag{11}$$

Die Größe $U(K)$ wird in einem diskreten $PD_{T1}$-Glied gebildet:

$$\left.\begin{array}{l} U(K) = U_p(K) + U_D(K) \\ U_D(K) = \varphi_D \cdot U_D(K-1) + (1 - \varphi_0) \cdot K_D(K) \cdot (\Delta\lambda(K) - \Delta\lambda(K-1))/T_A \\ U_p(K) = K_p(K)\,\Delta\lambda(K) \end{array}\right\} \tag{12}$$

Die Regelabweichung $\Delta\lambda(K)$ wird gebildet aus :

$$\Delta\lambda(K) = \lambda_{ref}^*(K) - \lambda_{ref}(K) \tag{13}$$

Wegen der dynamischen Eigenschaften der Regelstrecke ist es sinnvoll, die P.-bzw. D-Verstärkungsfaktoren geschwindigkeitsabhängig zu machen :

$$\left.\begin{aligned} K_p(K) &= K_{PO} \cdot V_{ref}(K) \\ K_D(K) &= K_{DO} \cdot V_{ref}(K) \end{aligned}\right\} \tag{14}$$

. Außerdem können die Faktoren $K_{PO}$, $K_{DO}$ der Regelstrecke angepaßt werden :

$$\left.\begin{aligned} K_p(O) &= K_{PO}\left( b^+, b^-, \frac{d\mu}{d\lambda} \right) \\ K_D(O) &= K_{DO}\left( b^+, b^-, \frac{d\mu}{d\lambda} \right) \end{aligned}\right\} \tag{15}$$

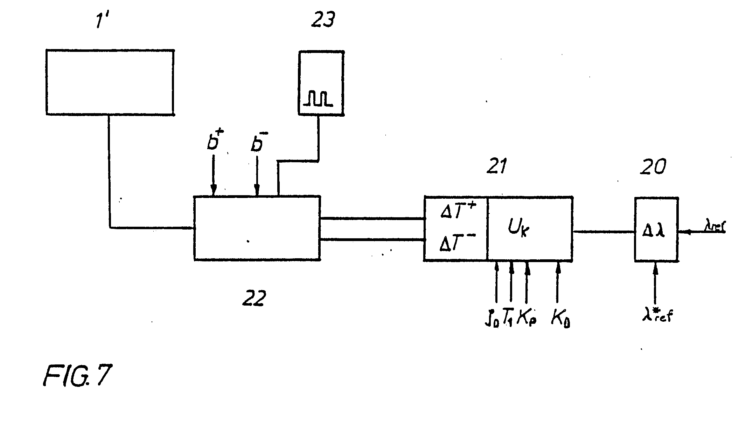

Ein Blockschaltbild zur Realisierung dieser Ansteuerung zeigt Fig. 7. Dort wird in einem Block 20 gemäß Gleichung (13) die Regelabweichung $\Delta\lambda(K)$ gebildet. Im Block 21 wird hieraus gemäß Gleichung (12) zuerst U(K) und hieraus $\Delta T^*(K)$ und $\Delta T^-(K)$ gemäß (11) gewonnen. Unter Berücksichtigung der in einem Block 22 eingegebenen identifizierten Größen $b^+$ und $b^-$ und den Zeitwerten $\Delta T$ werden im Block 22 die Impulse eines Impulsgebers 23 konstanter Frequenz in ihrer Länge moduliert und dem 3/3 Magnetventil 1' zur Ansteuerung der Druckaufbau- bzw. Druckabbaustellung zugeführt, wobei die Ansteuerzeiten zwischen einem Minimalwert und einem Maximalwert variiert werden können. Man könnte $b^+$ und $^-$ auch bei der Berechnung von $\Delta T^+$ und $\Delta T^-$ bereits berücksichtigen oder wie in der Gleichung (15) angegeben, bei der Berechnung der Größen $K_P$ und $K_D$ eingehen lassen.

Im Gegensatz zu den beiden vorn beschriebenen adaptiven Schlupfreglern werden in diesem Beispiel neben der Steigung des Schlupfkurve auch die unbekannten Proportionalitätsfaktoren $b^+$ und $b^-$ identifiziert.

Aus der Differentialgleichung für das Rad zu zwei Abtastzeitpunkten

$$\left.\begin{aligned} \dot{V}_R(K+1) &= C_B \cdot \mu(\lambda(K+1)) - C_1 \cdot P_B(K+1) \\ \dot{V}_R(K) \quad &= C_B \cdot \mu(\lambda(K)) - C_1 \cdot P_B(K) \end{aligned}\right\} \tag{16}$$

Täßt sich die Identifikationsgleichung

$$V_R(K+1) - V_R(K) = a \cdot (\lambda(K-1) - \lambda(K)) - b^+ \cdot C_1 \cdot \Delta T(K)^+ - b^- \cdot C_1 \Delta T(K) \tag{17}$$

gewinnen.

Hierin sind

$$\dot{V}_R(K+1) - \dot{V}_R(K) \approx (V_R(K+1) - 2 V_R(K) + V_R(K-1))/T_A,$$
$$\Delta T(K)^+, \quad \Delta T(K)^- \quad \text{und} \quad (\lambda(K+1) - \lambda(K)) \tag{18}$$

bekannte Größen, während die Koeffizienten

$$a = C_B \cdot \frac{\mu(\lambda(K+1)) - \mu(\lambda(K))}{\lambda(K+1) - \lambda(K)}, \quad b^+ \cdot C_1 \quad \text{und} \quad b^- \cdot C_1$$

identifiziert werden müssen.

Die Größe

$$\frac{\mu(\lambda(K+1)) - \mu(\lambda(K))}{\lambda(K+1) - \lambda(K)}$$

ist die mittlere Steigung $d\mu/d\lambda$ der Schlupfkurve im betrachteten Zeitintervall.

Die Identifikation aus Gleichung (17) geschieht durch Einsetzen der Meßwerte an mehreren Zeitpunkten und kann mit einer der bekannten Identifizierungsmethoden (z. B. der Methode der kleinsten Fehlerquadrate) erfolgen. Da in Gleichung (17) der Schlupf unter Verwendung von $V_{ref}$ gebildet wird, muß zur Identifikation $\lambda$ durch $\lambda_{ref}$ angenähert werden.

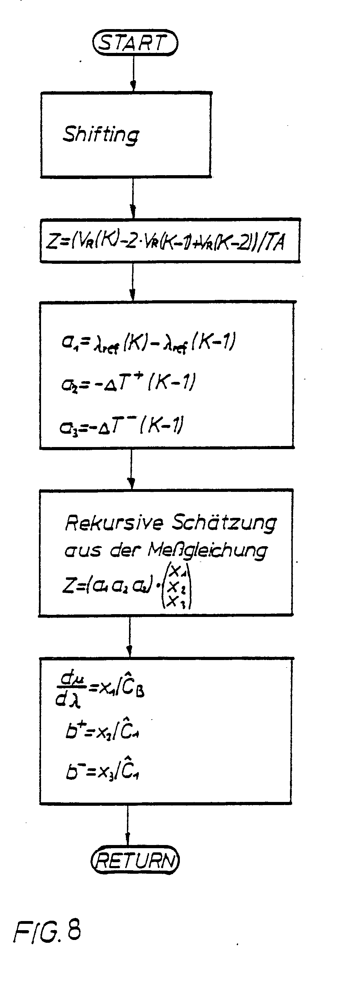

Ein Flußdiagramm dieser Identifikation zeigt Fig. 8. Dort wird der Ausdruck z gemäß Gleichung (18) gebildet und die Größen $a_1$ bis $a_3$ berechnet. Im folgenden Block (Rekursive Schätzung) wird ein Gleichungssystem mit den Unbekannten $x_1$ bis $x_3$ nach der Methode Recursiv Least Squares, Sqare Root Information Filter oder einem anderen Verfahren gelöst, wobei sich dann die gesuchten Werte $d\mu/d\lambda$, $b^+$ und $b^-$ errechnen lassen.

Nach Erhalt des Steigungswertes auf eine der angegebenen Methoden wird im Additionsglied 7 die Differenz

$$\frac{d\mu}{d\lambda}\bigg|_{Soll} - \frac{d\mu}{d\lambda}\bigg|_{(K-1)}$$

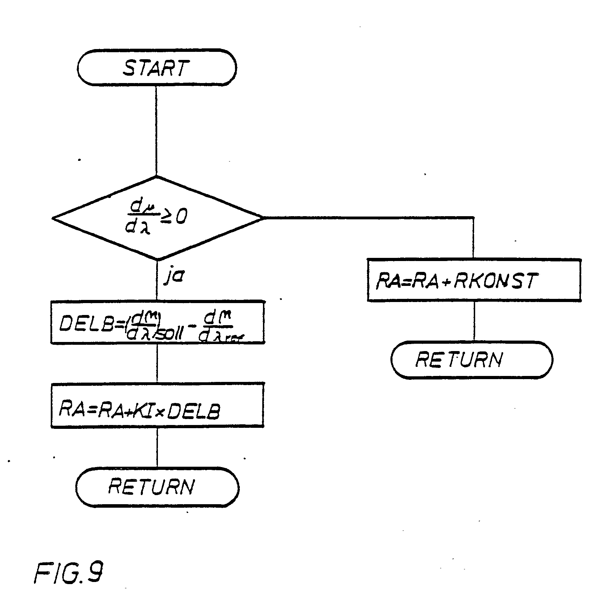

gebildet und im Regler 8 die Berechnung des Stellsignals RA nach dem in Fig. 9 gezeigten Ablauf vorgenommen. Ist das ermittelte $d\mu/d\lambda$ kleiner 0, so wird der augenblicklichen Regelabweichung eine Konstante zugefügt, um $d\mu/d\lambda$ wieder in den positiven Bereich zu bringen. Ist $d\mu/d\lambda$ größer 0, so wird obige Differenz (DELB) gebildet und dem Regler 8 zugeführt. Dieser hat Integrationsverhalten.

Das Reglerausgangssignal RA wird im Ausführungsbeispiel gemäß Fig. 2 dann nach der Berechnung von

$$V_{ref} = V_{ref} \cdot RA + V_{ref} \tag{18}$$

der Berechnung des Referenzschlupfs zugeführt.

Durch die Umformung gemäß Gleichung (18) kann verhindert werden, daß $v_{ref}$ unzulässig absinkt, wenn $V_{ref}$ durch Fehler in ihrer Berechnung zu weit sinkt.

Im Ausführungsbeispiel der Fig. 3 entspricht RA dem Soll-Referenzsignal $\lambda_{ref}*$.

Anhang I

Zur Auslegung des Reglers 2 wird das folgende Verfahren angewandt :

$$\dot{V}_R = -C_1 \cdot P_B + C_B \cdot \mu(\lambda, \text{Parameter}),$$
$$C_1 = \frac{R_d}{J} \cdot \left(\frac{M_B}{P_B}\right), \quad C_B = \frac{R_d^2 F_N}{J} \tag{a}$$

Aus (a) sollen nun stationäre Zustände ermittelt werden.

Für diese gilt :

$$\lambda = 1 - V_R/V_F = \text{const.},$$

d.h.
$$\dot{\lambda}_s = 0.$$

Daraus folgt :

$$\dot{V}_{RS} = (1 - \lambda_s) \cdot \dot{V}_{FS}, \tag{b}$$

worin $\dot{V}_{FS}$ nahezu konstant ist.

Die Gleichung (2) wird damit zu

$$(1 - \lambda_s) \cdot V_{FS} + C_1 \cdot P_{BS} = C_B \cdot \mu(\lambda_s). \tag{c}$$

Im folgenden wird ein Regelgesetz zugrundegelegt, das einen linearen Zusammenhang zwischen $P_{B\,Soll}$ und $\lambda$ vorsieht ; es gilt dann $P_{B\,Soll} = P_{B\,Soll}(\lambda)$.

Die stationäre Lösung $\lambda$ ist nun durch den Schnittpunkt zwischen der Geraden $(1 - \lambda) \cdot V_{FS} + C_1 \cdot P_{B\,Soll}(\lambda)$ und der Kurve $C_B \cdot \mu(\lambda)$ bestimmt.

Unter Vernachlässigung des Terms $(1 - \lambda) V_{FS}$ wurde dieser Sachverhalt in Fig. 4 dargestellt. Mit den in Fig. 4 angegebenen Bezeichnungen ergibt sich für $P_{B\,Soll}$ die Beziehung gemäß Gleichung (2).

Anhang II

Verwendete Symbole

| | |
|---|---|
| $P_B$ | Bremsdruck (Radbremszylinder) |
| $P_0$ | Vordruck |
| $\lambda$ | Schlupf |
| $\lambda_{ref}$ | Referenzschlupf |
| $V_F$ | Fahrzeuggeschwindigkeit |

| | |
|---|---|
| $V_R$ | Radgeschwindigkeit |
| $V_{ref}$ } | Referenzgeschwindigkeiten |
| $V_{ref}$ | |
| $\mu$ | Kraftschlußbeiwert |
| $\varepsilon_\lambda$, $\varepsilon_p$ | Schwellenwerte (Regelabweichung) |
| $R_d$ | dynamischer Radradius |
| $P_B$ | Bremskraft |
| $F_N$ | Normalkraft auf Rad |
| $J$ | Radträgheitsmoment |
| $(M_B/P_B)$ | (Bremsmoment/Bremsdruck) |
| $K_i^1$ | Verstärkungsfaktoren |
| $T_R$ | Regel-Intervall |
| $T_A$ | Abtast-Intervall |
| $C^+$, $C^-$, $b^+$, $b^-$ | Ventilkonstanten |
| $C_1$, $C_B$ | siehe Gleichung (2) |
| $\hat{C}_1$, $\hat{C}_B$ | Schätzwerte hierfür |
| $(C_B \cdot \mu)_{max}$ | maximal zu erwartender Wert für $C_B\mu$ |
| $C_1 \cdot P_{B\,Soll}$ | einzustellende Radverzögerungsgerade |
| $\Delta P_B$ | Sprung im Radbremsdruck |
| $\varphi D$ | Gewichtungsfaktor |
| $\Delta T$, $\Delta T^+$, $\Delta T^-$ | Ventilöffnungszeiten |

## Patentansprüche

1. Verfahren zur Einstellung eines hinsichtlich des Kraftschlußbeiwerts in Längs- und Querrichtung optimierten Bremsschlupfs eines Fahrzeugrads, bei dem bei einer Abweichung des ermittelten Schlupfwerts von einem Vergleichswert mittels eines Schlupfreglers der Bremsdruck durch Ansteuern einer Bremsdrucksteuereinrichtung im Sinne einer Einstellung des Schlupfwerts auf den Vergleichswert variiert wird (unterlagerter Regelkreis), dadurch gekennzeichnet, daß in einem überlagerten Regelkreis die Steigung der $\mu$-Schlupfkurve $d\mu/d\lambda$ bestimmt wird, diese Steigung mit einem vorgegebenen positiven Steigungswert verglichen wird und aus dem Vergleich mittels eines zweiten Reglers entweder der Vergleichswert $\lambda^*_{ref}$ variiert wird oder bei festem Vergleichswert eine in die Schlupfbildung eingehende Geschwindigkeitsgröße ($V_{ref}$ oder $V_R$) variiert wird.

2. Verfahren nach Anspruch 1, dadurch gekennzeichnet, daß der vorgegebene positive Steigungswert in Abhängigkeit von Parametern verändert wird.

3. Verfahren nach Anspruch 2, dadurch gekennzeichnet, daß die Änderung bei Aussage der Parameter, daß in Querrichtung im Augenblick ein geringer Kraftschlußbeiwert zulässig ist, die Änderung des Steigungswerts $d\mu/d\lambda$ bis zum Wert 0 erfolgt.

4. Verfahren nach einem der Ansprüche 2 oder 3, dadurch gekennzeichnet, daß die Parameter für die Änderung der Lenkwinkel und/oder die Gierbeschleunigung des Fahrzeugs sind.

5. Verfahren nach einem der Ansprüche 1 bis 4, dadurch gekennzeichnet, daß der Schlupfregler ein P-Glied zur Ermittlung der zur Regelung des Bremsschlupfs erforderlichen Ansteuersignale für die Bremsdrucksteuereinrichtung enthält.

6. Verfahren nach Anspruch 5, dadurch gekennzeichnet, daß in dem P-Glied $P_{B\,Soll}$ zu

$$P_{B\,Soll} = \frac{(C_B \cdot \mu)_{max}}{2\,\varepsilon_\lambda \cdot \hat{C}_1} \cdot (\lambda^*_{ref} - \lambda_{ref}) + \frac{(C_B \cdot \mu)_{max}}{2\,\hat{C}_1}$$

bestimmt wird, wobei

| | |
|---|---|
| $P_{B\,Soll}$ | der Sollbremsdruck, |
| $\lambda^*_{ref}$ | |
| $\varepsilon\lambda$ | } vorzugebenden Größen |
| $\lambda_{ref}$ | der zu ermittelnde Referenzschlupf |
| $\hat{C}_1$ | |
| $(C_B \cdot \mu)_{max}$ | } abzuschätzende Konstanten sind |

7. Verfahren nach Anspruch 5 oder 6, dadurch gekennzeichnet, daß das P-Glied durch ein I-Glied (Integralglied) ergänzt wird.

8. Verfahen nach Anspruch 7, dadurch gekennzeichnet, daß noch ein D-Glied (Differential-Glied) zugefügt wird.

9. Verfahren nach einem der Ansprüche 5 bis 8, dadurch gekennzeichnet, daß aus der Differenz des ermittelten Sollbremsdrucks und des gemessenen Istbremsdrucks in einem Teil des Schlupfreglers ein Steuersignal für den Druckanstieg, die Druckkonstanthaltung oder den Druckabbau abgeleitet wird.

10. Verfahren nach Anspruch 9, dadurch gekennzeichnet, daß entsprechend der Richtung und Größe der Abweichung und unter Berücksichtigung des gemessenen Vordrucks die Länge des Ansteuersignals für den Druckaufbau oder Druckabbau ermittelt wird.

11. Verfahren nach Anspruch 5, dadurch gekennzeichnet, daß im Regler die Regelabweichung

$$U_R = (\lambda^*_{ref} - \lambda_{ref}) + K_D^1 \frac{d}{dt}(\lambda^*_{ref} - \lambda_{ref}) + K_I^1 \cdot \int_0^t (\lambda^*_{ref} - \lambda_{ref})\,dt$$

(wobei $\lambda^*_{ref}$, $K_D^1$ und $K_T^1$ vorgegebene Größen sind und $\lambda_{ref}$ die ermittelte Größe ist) bestimmt wird, und daß aus dem Vorzeichen und der Größe der Abweichung der Steuerbefehl für die Bremsdrucksteuereinheit zum Druckabbau, -konstanthaltung oder -aufbau abgeitet wird.

12. Verfahren nach einem der Ansprüche 1 bis 4, dadurch gekennzeichnet, daß in einem Proportional/Differentialglied die Regelgröße

$$U(K) = U_p(K) + U_D(K),$$
$$U_D(K) = \varphi_D(K-1) + (1-\varphi_D) \cdot K_D(K) \cdot (\Delta\lambda(K) - \Delta\lambda(K-1))/T_A,$$
$$U_p(K) = K_p(K) \cdot \Delta\lambda(K)$$

bestimmt wird, wobei Index (K) bzw. (K—1) die entsprechenden Werte zu den um $T_A$ auseinanderliegenden Abtastzeitpunkten und

| | |
|---|---|
| $K_p$, $K_D$ | zeitlich veränderliche Verstärkungsfaktoren, |
| $U_D$ | den Differentialanteil |
| $U_p$ | den Proportionalanteil |
| $\varphi D$ | ein Gewichtungsfaktor |

und $\Delta\lambda K = (\lambda^*_{ref}(K) - \lambda_{ref}(K))$ bedeuten, daß aus dem Vorzeichen von U(K) die Richtung der Druckänderung und aus dem Betrag von U(K) die Länge von äquidistanten Ansteuerimpulsen für die Bremsdrucksteuereinheit bestimmt wird.

13. Verfahren nach Anspruch 12, dadurch gekennzeichnet, daß die Proportional- Differentialverstärkungsfaktoren geschwindigkeitsabhängig gemacht werden und/oder von den dem Druckabbau bzw. dem Druckaufbau zugeordnetne Proportionalitätsfaktoren $b^-$ und $b^+$ abhängig gemacht werden.

14. Verfahren nach Anspruch 12 oder 13, dadurch gekennzeichnet, daß aus der Identifikationsgleichung

$$\dot{V}_R(K+1) - \dot{V}_R(K) = a \cdot (\lambda_{ref}(K+1) - \lambda_{ref}(K)) - b^+ \cdot C_1 \cdot \Delta T(K)^+ - b^- \cdot C_1 \cdot \Delta T(K)^-$$

in der $\quad \dot{V}_R(K-1) - \dot{V}_R(K) \approx (V_R(K+1) - 2V_R(K) + V_R(K-1)/T_A)$,

$$V_R(K) = \text{die Radgeschwindigkeit}$$
$$\Delta T^+(K) = U(K) \text{ für } U(K) > 0, \Delta T^+(K) = 0 \text{ für } U(K) \leqslant 0,$$
$$\Delta T^-(K) = -U(K) \text{ für } U(K) < 0, \Delta T^-(K) = 0 \text{ für } U(K) \geqslant 0,$$

und $\lambda_{ref(K+1)} - \lambda_{ref(K)}$ bekannte Größen sind, durch Einsetzen dieser Werte zu verschiedenen Zeitpunkten die Größen a, $b^+.C_1$ und $b^-.C_1$ ermittelt werden, wobei a proportional der mittleren Steigung $d\mu/d\lambda$ ist und aus den ermittelten Größen $b^+.C_1$ und $b^-.C_1$ unter Verwendung des Schätzwertes $\hat{C}_1$ für $C_1$ die Größen $b^+$ und $b^-$ gewonnen werden.

15. Verfahren nach einem der Ansprüche 1 bis 11, dadurch gekennzeichnet, daß aus der Beziehung

$$\left.\frac{d\mu}{d\lambda}\right|_{(K-1)} = \frac{2}{\hat{C}_B \cdot T_A} \cdot \frac{V_R(K) - 2 \cdot V_R(K-1) + V_R(K+2)}{\dfrac{V_R(K-2)}{V_{ref}(K-2)} - \dfrac{V_R(K)}{V_{ref}(K)}}$$

| | |
|---|---|
| $d\mu/d\lambda$ | abgeschätzt wird, wobei |
| $V_R$ | die bekannte Radgeschwindigkeit |
| $V_{ref}$ | die bekannte Referenzgeschwindigkeit |
| $\hat{C}_B$ | ein geschätzter Mittelwert von $C_B = R^2_d F_N/J$ |

$R_d$        dynamischer Radradius
$F_N$        Normalkraft des Rads
$J$        Radträgheitsmoment
$T_A$        die Abtastzeit ist.

16. Verfahren nach Anspruch 14 oder 15, dadurch gekennzeichnet, daß der ermittelte Wert für $d\mu/d\lambda$ mit dem vorgegebenen Steigungswert verglichen wird und daß die Differenz einem Regler zugeführt wird, der daraus einen Vergleichsschlupf $\lambda^*_{ref}$ bildet.

17. Verfahren nach Anspruch 14 oder 15, dadurch gekennzeichnet, daß der ermittelte Wert für $d\mu/d\lambda$ mit dem vorgegebenen Steigungswert verglichen wird und daß die Differenz einem Regler zugeführt wird, der daraus eine Regelabweichung RA erzeugt, die mit der ermittelten Referenzgeschwindigkeit zu einer Pseudoreferenzgeschwindigkeit verarbeitet wird, die in die Schlupfbildung zur Erzeugung des mit dem festen Vergleichswert zu vergleichenden Schlupfs eingeht.

18. Verfahren nach Anspruch 17, dadurch gekennzeichnet, daß die Verarbeitung der Regelabweichung aus einer Addition der Regelabweichung zu der ermittelten Referenzgeschwindigkeit besteht.

19. Verfahren nach Anspruch 18, dadurch gekennzeichnet, daß die Verarbeitung der Regelabweichung aus einer Multiplikation der Regelabweichung mit der ermittelten Referenzgeschwindigkeit und einer zusätzlichen Addition der ermittelten Referenzgeschwindigkeit zu dem Produkt besteht.

## Claims

1. Method for adjusting a braking slip of a vehicle wheel optimalized with regard to the grip coefficient in the longitudinal and transverse directions, whereby in the case of a deviation of the determined slip value from a comparative value the braking pressure is varied by means of a slip controller by modulating a braking pressure control device in the sense of an adjustment of the slip value to the comparative value (infraposed control circuit) characterized in that in a superimposed control circuit the slope of the $\mu$ slip curve $d\mu/d\lambda$ is determined, this slope is compared with a prescribed positive slope value and from the comparison by means of a second controller, either the comparative value $\lambda^*_{ref}$ is varied or in the case of a fixed comparative value, a speed quantity ($V_{ref}$ or $V_R$) which participates in forming this slip is varied.

2. Method according to Claim 1, characterized in that the prescribed positive slope value is varied as a function of parameters.

3. Method according to Claim 2, characterized in that where the parameters state that a low grip coefficient in the transverse direction is instantaneously admissible the variation the variation (sic) of the slope value $d\mu/d\lambda$ to the value 0 occurs.

4. Method according to one of Claims 2 or 3, characterized in that the parameters for the variation are the steering angle and/or the yawing acceleration of the vehicle.

5. Method according to one of Claims 1 to 4, characterized in that the slip controller comprises a P-element to determine the modulation signals for the braking pressure control device which are required to control the braking slip.

6. Method according to Claim 5, characterized in that $P_{Bdesired}$ is determined in the P-element as

$$P_{Bdesired} = \frac{(C_B \cdot \mu)_{max}}{2\,\varepsilon_\lambda \cdot C_1} \cdot (\lambda^*_{ref} - \lambda_{ref}) + \frac{(C_B \cdot \mu)_{max}}{2\,C_1}$$

wherein $P_{Bdesired}$ is the desired braking pressure, $\lambda^*_{ref}$, $\varepsilon_\lambda$ are quantities to be prescribed, $\lambda_{ref}$ the reference slip to be determined and $C_1$, $(C_{B.\mu})_{max}$ are constants to be estimated.

7. Method according to Claim 5 or 6, characterized in that the P-element is complemented by an I-element (integral element).

8. Method according to Claim 7, characterized in that a D-element (differential element) is further added.

9. Method according to one of Claims 5 to 8, characterized in that a control signal for pressure increase, pressure holding or pressure reduction derived from the difference between the determined desired braking pressure and the measured actual braking pressure in a part of the slip controller.

10. Method according to Claim 9, characterized in that the length of the modulation signal for the pressure build-up or pressure decay is determined correspondingly to the direction and magnitude of the deviation and taking the measured initial pressure into consideration.

11. Method according to Claim 5, characterized in that the control deviation

$$U_R = (\lambda^*_{ref} - \lambda_{ref}) + K^1_D \frac{d}{dt}(\lambda^*_{ref} - \lambda_{ref}) + K^1_I \cdot \int_0^t (\lambda^*_{ref} - \lambda_{ref})\, dt$$

(in which $\lambda^*_{ref}$, $K_D1$ and $K_T1$ are prescribed quantities and $\lambda_{ref}$ is the determined quantity) is determined in the controller, and that the control command for the braking pressure control unit for pressure decay, pressure holding or pressure build-up is derived from the sign and magnitude of the deviation.

12. Method according to one of Claims 1 to 4, characterized in that the control variable

$$U(K) = U_p(K) + U_D(K),$$
$$U_D(K) = \varphi_D(K-1) + (1-\varphi_D) \cdot K_D(K) \cdot (\Delta\lambda(K) - \Delta\lambda(K-1))/T_A,$$
$$U_p(K) = K_p(K) \cdot \Delta\lambda(K)$$

is determined in a proportional/differential element, in which index $(K)$ and $(K-1)$ conote the corresponding values for the sensing times which are $T_A$ apart and $K_p$, $K_D$ conote time-variable amplification factors, $U_D$ is the differential fraction, $U_p$ the proportional fraction, and D a weighting factor, and $\Delta K = (\lambda*_{ref}(K) - \lambda_{ref}(K))$, that the direction of the pressure variation is determined from the sign of $U(K)$ and the length of equidistant modulation impulses for the braking pressure control unit from the value of $U(K)$.

13. Method according to Claim 12, characterized in that the proportional and differential amplification factors are made a function of the speed and/or are made a function of the proportionality factors $b^-$ and $b^+$ associated with the pressure reduction and pressure build-up.

14. Method according to Claim 12 or 13, characterized in that from the identification equation

$$\dot{V}_R(K+1) - \dot{V}_R(K) = a \cdot (\lambda_{ref}(K+1) - \lambda_{ref}(K)) - b^+ \cdot C_1 \cdot \Delta T(K)^+ - b^- \cdot C_1 \cdot \Delta T(K)^-$$

in which $\quad \dot{V}_R(K-1) - \dot{V}_R(K) \approx (V_R(K+1) - 2V_R(K) + V_R(K-1)/T_A),$

$V_R(K)$ = the wheel velocity

$\Delta T^+(K) = U(K)$ for $U(K) > 0$, $\Delta T^+(K) = 0$ for $U(K) \leqslant 0$,

$\Delta T^-(K) = -U(K)$ for $U(K) < 0$, $\Delta T^-(K) = 0$ for $U(K) \geqslant 0$,

and

$\lambda_{ref}(K+1) - \lambda_{ref}(K)$ are known quantities, the quantities a, $b^+.C_1$ and $b^-.C_1$ are determined by inserting these values at different times, a being proportional to the mean slope $d\mu/d\lambda$, and the quantities $b^+$ and $b^-$ being obtained from the determined quantities $b^+.C_1$ and $b^-.C_1$ by using the estimated value $C_1$ for $C_1$.

15. Method according to one of Claims 1 to 11, characterized in that $d\mu/d\lambda$ is estimated from

$$\frac{d\mu}{d\lambda}\bigg|_{(K-1)} = \frac{2}{\hat{C}_B \cdot T_A} \cdot \frac{V_R(K) - 2 \cdot V_R(K-1) + V_R(K+2)}{\dfrac{V_R(K-2)}{V_{ref}(K-2)} - \dfrac{V_R(K)}{V_{ref}(K)}}$$

in which $V_R$ is the known wheel velocity, $V_{ref}$ is the known reference velocity, $C_B$ is an estimated mean value of $C_B = R^2_d F_N/J$, $R_d$ is the dynamic wheel radius, $F_N$ is the force normal to the wheel, J is the moment of wheel inertia, and $T_A$ is the sensing time.

16. Method according to Claim 14 or 15, characterized in that the value determined for $d\mu/d\lambda$ is compared with the prescribed slope value and that the difference is fed to a controller which forms a comparative slip $\lambda*_{ref}$ from the latter.

17. Method according to Claim 14 or 15, characterized in that the value determined for $d\mu/d\lambda$ is compared with the prescribed slope value and that the difference is fed to a controller which generates from the latter a control deviation RA which is processed with the reference speed determined to form a pseudo reference speed which participates in the slip formation to generate the slip to be compared with the fixed comparative value.

18. Method according to Claim 17, characterized in that the processing of the control deviation consists of an addition of the control deviation, to the reference speed determined.

19. Method according to Claim 18, characterized in that the processing of the control deviation consists of a multiplication of the control deviation with the reference speed determined and of an additional addition of the reference speed determined to the product.


## Revendications

1. Procédé pour mettre au point, en ce qui concerne le coefficient d'adhérence, le glissement optimalisé en direction longitudinale et transversale d'une roue de véhicule, procédé dans lequel, lors d'un écart entre la valeur de glissement détectée et une valeur de comparaison, la pression de freinage est modifiée au moyen d'un régulateur de glissement, en agissant sur un dispositif de commande de la pression de freinage dans le sens d'un ajustement de la valeur de glissement sur la valeur de comparaison

11

EP 0 226 627 B1

(circuit de réglage secondaire), procédé caractérisé en ce que, dans un circuit de réglage prioritaire, la pente $d\mu/d\lambda$ de la course de glissement $\mu$ est déterminée, cette pente est comparée avec une valeur de pente positive prédéfinie, et à partir de cette comparaison, au moyen d'un second régulateur, ou bien la valeur de comparaison $\lambda^{*}_{ref}$ est modifiée, ou bien, pour une valeur de comparaison fixe, une grandeur de vitesse ($V_{ref}$ ou $V_R$) entrant dans la formation du glissement, est modifiée.

2. Procédé selon la revendication 1, caractérisé en ce que la valeur de pente positive prédéfinie est modifiée en fonction de paramètres.

3. Procédé selon la revendication 2, caractérisé en ce que, lorsque cette modification, d'après les paramètres, est un coefficient d'adhérence plus réduit est momentanément admissible en direction transversale, la modification de la valeur de pente $d\mu/d\lambda$ s'effectue jusqu'à la valeur 0.

4. Procédé selon une des revendications 2 ou 3, caractérisé en ce que les paramètres pour la modification sont l'angle de direction et/ou l'accélération d'embardée du véhicule.

5. Procédé selon une des revendications 1 à 4, caractérisé en ce que le régulateur de glissement comprend un organe proportionnel pour déterminer les signaux de commande, nécessaires pour la régulation du glissement de freinage, destinés au dispositif de commande de la pression de freinage.

6. Procédé selon la revendication 5, caractérisé en ce que, dans l'organe proportionnel, la pression de freinage de consigne est déterminée par l'égalité :

$$P_{B\,Soll} = \frac{(C_B \cdot \mu)_{max}}{2\,\varepsilon_\lambda \cdot C_1} \cdot (\lambda^{*}_{ref} - \lambda_{ref}) + \frac{(C_B \cdot \mu)_{max}}{2\,C_1}$$

dans laquelle

$P_{B\,Soll}$ pression de freinage de consigne

$\lambda^{*}_{ref}$ } grandeurs données au préalable

$\varepsilon\lambda$ }

$\lambda_{ref}$ glissement de référence à déterminer

$C_1$ }

$(C_B \cdot \mu)_{max}$ } constantes à évaluer.

7. Procédé selon la revendication 5 ou 6, caractérisé en ce que l'organe proportionnel est complété par un organe I (organe intégral).

8. Procédé selon la revendication 7, caractérisé en ce qu'un organe D (organe différentiel) est en outre ajouté.

9. Procédé selon une des revendications 5 à 8, caractérisé en ce qu'à partir de la différence entre la pression de freinage de consigne déterminée et la pression de freinage réelle mesurée, un signal de commande est dérivé dans une partie du régulateur de glissement pour l'augmentation de la pression, le maintien d'une pression constante ou la réduction de la pression.

10. Procédé selon la revendication 9, caractérisé en ce qu'en fonction du sens et de la grandeur de l'écart, et en tenant compte de la pression préalable mesurée, la longueur du signal de commande pour l'établissement de la pression ou pour la réduction de la pression est déterminée.

11. Procédé selon la revendication 5, caractérisé en ce que, dans le régulateur, l'écart de réglage est déterminé par l'égalité :

$$U_R = (\lambda^{*}_{ref} - \lambda_{ref}) + K_D^1 \frac{d}{dt}(\lambda^{*}_{ref} - \lambda_{ref}) + K_I^1 \cdot \int_0^t (\lambda^{*}_{ref} - \lambda_{ref})\,dt$$

dans laquelle $\lambda^{*}_{ref}$, $K_D^1$ et $K_T^1$ sont des grandeurs données au préalable et $\lambda_{ref}$ la grandeur déterminée, tandis qu'à partir du signe et de la grandeur de l'écart, l'ordre de commande pour l'unité de commande de la pression de freinage est dérivé, pour réduire la pression, la maintenir constante ou l'augmenter.

12. Procédé selon une des revendications 1 à 4, caractérisé en ce que, dans un organe proportionnel/différentiel, les grandeurs de réglage :

$$U(K) = U_p(K) + U_D(K),$$

$$U_D(K) = \varphi_D(K-1) + (1-\varphi_D) \cdot K_D(K) \cdot (\Delta\lambda(K) - \Delta\lambda(K-1))/T_A,$$

$$U_p(K) = K_p(K) \cdot \Delta\lambda(K)$$

sont déterminées, les indices (K) ou (K—1) indiquant des valeurs correspondant à des instants d'exploration éloignés l'un de l'autre de $T_A$, tandis que :

| | |
|---|---|
| $K_p$, $K_D$ | sont des facteurs d'amplification modifiables dans le temps |
| $U_D$ | est la partie différentielle |
| $U_p$ | est la partie proportionnelle |
| $\varphi_D$ | est un facteur de pondération |

et que $\Delta\lambda K = (\lambda^{*}_{ref}(K) - \lambda_{ref}(K))$ signifie qu'à partir du signe de U(K), le sens de la modification de pression, et à partir de la valeur absolue de U(K), la longueur d'impulsions de commande équidistantes, pour l'unité de commande de la pression de freinage, sont déterminés.

13. Procédé selon la revendication 12, caractérisé en ce que les facteurs d'amplification proportion-

12

nelle et différentielle sont rendus dépendants de la vitesse et/ou sont rendus dépendants des facteurs de proportionnalité $b^-$ et $b^+$ associés à la réduction de pression ou à l'augmentation de pression.

14. Procédé selon la revendication 12 ou 13, caractérisé en ce qu'à partir de l'égalité d'identification :

$$\dot{V}_R(K+1) - \dot{V}_R(K) = a \cdot (\lambda_{ref}(K+1) - \lambda_{ref}(K)) - b^+ \cdot C_1 \cdot \Delta T(K)^+ - b^- \cdot C_1 \cdot \Delta T(K)^-$$

dans laquelle :

$$\dot{V}_R(K-1) - \dot{V}_R(K) = (V_R(K+1) - 2 V_R(K) + V_R(K-1)/T_A),$$

et dans laquelle :

$V_R(K)$ = vitesse de la roue

$\Delta T^+(K) = U(K)$ avec $U(K) > 0$, $\Delta T^+(K) = 0$ avec $U(K) \leqslant 0$,

$\Delta T^-(K) = -U(K)$ avec $U(K) < 0$, $\Delta T^-(K) = 0$ avec $U(K) \geqslant 0$,

tandis que $\lambda_{ref(K+1)} - \lambda_{ref(K)}$ sont des grandeurs connues, par mise en œuvre de ces valeurs à différents instants, les grandeurs a, $b^+.c_1$ et $b^-.c_1$ sont déterminées, A étant proportionnel à la pente moyenne $d\mu/d\lambda$ et les grandeurs $b^+$ et $b^-$ étant obtenues à partir des grandeurs ainsi déterminées $b^+.c_1$ et $b^-.c_1$ en utilisant la valeur estimée $C_1$ pour $C_1$.

15. Procédé selon une des revendications 1 à 11, caractérisé en ce que, à partir de la relation :

$$\frac{d\mu}{d\lambda}\bigg|_{(K-1)} = \frac{2}{C_B \cdot T_A} \cdot \frac{V_R(K) - 2 \cdot V_R(K-1) + V_R(K+2)}{\dfrac{V_R(K-2)}{V_{ref}(K-2)} - \dfrac{V_R(K)}{V_{ref}(K)}}$$

$d\mu/d\lambda$      est évalué avec

$V_R$      vitesse de roue connue

$V_{ref}$      vitesse de référence connue

$C_B$      une valeur moyenne estimée de $C_B = R^2 {}_d F_N/J$

$R_d$      rayon de roue dynamique

$F_N$      effort normal de la roue

$J$      moment d'inertie de la roue

$T_A$      période d'exploration.

16. Procédé selon la revendication 14 ou 15, caractérisé en ce que la valeur déterminée pour $d\mu/d\lambda$ est comparée à la valeur de pente prédéfinie et la différence est appliquée à un régulateur qui forme à partir de là un glissement de comparaison $\lambda^*_{ref}$.

17. Procédé selon la revendication 14 ou 15, caractérisé en ce que la valeur déterminée pour $d\mu/d\lambda$ est comparée à la valeur de pente prédéfinie et la différence est appliquée à un régulateur qui fournit à partir de là, un écart de réglage RA qui est traité avec la vitesse de référence déterminée pour obtenir une pseudo-vitesse de référence, qui entre dans la formation du glissement pour obtenir le glissement à comparer avec la valeur de comparaison fixe.

18. Procédé selon la revendication 17, caractérisé en ce que le traitement de l'écart de réglage consiste en une addition de cet écart de réglage à la vitesse de référence déterminée.

19. Procédé selon la revendication 18, caractérisé en ce que le traitement de l'écart de réglage consiste en une multiplication de cet écart de réglage par la vitesse de référence déterminée et à ajouter en outre à ce produit la vitesse de référence déterminée.

FIG.1

FIG. 2

FIG. 3

FIG.4

FIG.5

START

$|P_a - P_{BA}| < \varepsilon_p$

ja

$IMIN = IMIN + 1$

Shifting

$IMIN \geqq 3$

RETURN

$DSL = V_R(k-2)/V_{ref}(k-2) - V_R(k)/V_{ref}(k)$

$|DSL| > \varepsilon_d$

ja

$$\frac{d\mu}{d\lambda_{ref}} = \frac{2(V_R(k) - 2V_R(k-1) + V_R(k-2))}{DSL \cdot C_\beta \cdot T_A}$$

BEGRENZUNG

RETURN

$P_{BA} = P_B$

$$\frac{d\mu}{d\lambda_{ref}} = \left(\frac{d\mu}{d\lambda}\right)_{soll}$$

$IMIN = 0$

RETURN

FIG.6

FIG 7

FIG. 8

FIG.9